# EUROPÄISCHE PATENTANMELDUNG

(11) **EP 3 895 918 A1**
(43) Veröffentlichungstag der Anmeldung: **20.10.2021**
(21) Anmeldenummer: 21165862.0
(22) Anmeldetag: 30.03.2021
(51) Int. Cl.: B60G 3/06

(54) **ACHSBAUGRUPPE MIT VERSTELLBARER SPURWEITE**

(30) Priorität: 17.04.2020 DE 102020110479
(71) Anmelder: Amazonen-Werke H. Dreyer SE & Co. KG, 49205 Hasbergen (DE)
(72) Erfinder: VOTH, Robert, 49163 Bohmte (DE); SUHR, André, 01159 Dresden (DE); EHLEN, Volker, 49205 Hasbergen (DE); HAID, Robert, 89257 Illertissen (DE)
(74) Vertreter: Pelster Behrends Patentanwälte PartG mbB

(57) **Zusammenfassung**

Die Erfindung betrifft eine Achsbaugruppe (10) mit verstellbarer Spurweite für eine landwirtschaftliche Verteilmaschine (100), mit zwei Einzelradaufhängungen (12a, 12b), wobei die Einzelradaufhängungen (12a, 12b) jeweils einen Radträger (14a, 14b) aufweisen, welcher mit einem Querlenker (16a, 16b) und einer Feder-Dämpfer-Einheit (18a, 18b) verbunden ist, wobei die Einzelradaufhängungen (12a, 12b) jeweils einen Anlenkkörper (20a, 20b) aufweisen, an welchem der Querlenker (16a, 16b) und die Feder-Dämpfer-Einheit (18a, 18b) der jeweiligen Einzelradaufhängung (12a, 12b) angelenkt sind, und wobei die Anlenkkörper (20a, 20b) zum Ändern der Spurweite in Querrichtung (yₐ, y_{b}) bewegbar sind.

## Beschreibung

Die Erfindung betrifft eine Achsbaugruppe mit verstellbarer Spurweite nach dem Oberbegriff des Patentanspruchs 1 und eine landwirtschaftliche Verteilmaschine nach dem Oberbegriff des Patentanspruchs 14.

Landwirtschaftliche Verteilmaschinen, wie beispielsweise Feldspritzen, können eine verstellbare Spurweite aufweisen, damit verschiedene Kulturen und unterschiedliche Reihenweiten durchfahren werden können. Eine derartige landwirtschaftliche Maschine ist beispielsweise aus der Druckschrift DE 10 2016 116 307 A1 bekannt. Die dort offenbarte landwirtschaftliche Maschine realisiert die Spurweitenverstellung über bewegbare Laufradschwingen, welche den jeweiligen Laufrädern der landwirtschaftlichen Maschine zugeordnet sind.

Eine Achsbaugruppe mit verstellbarer Spurweite für eine landwirtschaftliche Maschine ist außerdem aus der Druckschrift WO 2010/020607 A1 bekannt. Bei dieser und anderen Achskonstruktionen wird das Federungs- und Dämpfungsverhalten der Landmaschine durch die Spurweitenverstellung in erheblichem Maße beeinflusst. Nach einer Spurweitenverstellung sind also die Federungs- und Dämpfungseigenschaften der Feder-Dämpfer-Einheiten der Achsbaugruppe, sofern dies überhaupt möglich ist, aufwändig anzupassen, um die Materialausbringung mit einer geeigneten Fahrwerkskonfiguration durchführen zu können.

Um die Abhängigkeit zwischen Spurweitenverstellung und Federungs- und/oder Dämpfungsverhalten auf ein akzeptables Maß zu reduzieren, sind bisher komplexe Achskonstruktionen erforderlich, welche üblicherweise einen großen Bauraum in Anspruch nehmen.

Die der Erfindung zugrundeliegende Aufgabe besteht somit darin, eine Spurweitenverstellung für eine landwirtschaftliche Verteilmaschine zu ermöglichen, bei welcher der Einfluss der Spurweitenverstellung auf das Federungs- und/oder Dämpfungsverhalten gering ist und welche außerdem mit einer bauraumsparenden Konstruktion umsetzbar ist.

Die Aufgabe wird gelöst durch eine Achsbaugruppe der eingangs genannten Art, wobei die Anlenkkörper der erfindungsgemäßen Achsbaugruppe zum Ändern der Spurweite in Querrichtung bewegbar sind.

An den Anlenkkörpern der Einzelradaufhängungen der Achsbaugruppe ist jeweils ein Querlenker und eine Feder-Dämpfer-Einheit angelenkt. Durch ein Bewegen der Anlenkkörper in Querrichtung werden folglich die gesamten Einzelradaufhängungen verfahren, wodurch es zur Verstellung der Spurweite kommt. Die Einzelradaufhängungen der Achsbaugruppe folgen dem Prinzip einer McPherson-Achse, sodass eine bauraumsparende Achskonstruktion mit einer Spurweitenverstellmöglichkeit geschaffen wird. Über die Achsbaugruppe werden die Räder einzeln geführt, sodass die bei Anfahr- und Bremsvorgängen sowie die während Kurvenfahrten auftretenden Kräfte sicher übertragen werden.

Die Radträger können auch als Achsschenkel bezeichnet werden. Die Feder-Dämpfer-Einheiten dienen zur Stoß- und Schwingungsminderung und zur Radführung. Die Feder-Dämpfer-Einheiten können beispielsweise Federungszylinder, insbesondere hydropneumatische Federungszylinder, sein. Die Feder-Dämpfer-Einheiten sind vorzugsweise unbeweglich bzw. starr, also nicht-gelenkig, an dem jeweiligen Radträger befestigt. Die Längsachsen der Feder-Dämpfer-Einheiten bilden vorzugsweise die Lenkachsen des an dem jeweiligen Radträger montierten Rades. Die Anlenkkörper können sogenannte Integralträger sein. Insbesondere sind die Anlenkkörper einstückig ausgebildet. Die Anlenkkörper können starre Körper sein. Insbesondere sind die Einzelradaufhängungen McPherson-Federbein-Radaufhängungen.

In einer bevorzugten Ausführungsform der erfindungsgemäßen Achsbaugruppe sind die Querlenker und die Feder-Dämpfer-Einheiten derart an dem jeweiligen Anlenkkörper angelenkt, dass beim Bewegen der Anlenkkörper in Querrichtung zum Ändern der Spurweite die Neigungsausrichtung der Feder-Dämpfer-Einheiten erhalten bleibt. Die Spurweitenverstellung führt somit nicht zu einem geänderten Federungsverhalten und/oder zu einem geänderten Dämpfungsverhalten. Zur Beibehaltung der Fahrwerkscharakteristik ist nach Verstellung der Spurweite folglich keine Anpassung der Federungseigenschaften und/oder der Dämpfungseigenschaften der Feder-Dämpfer-Einheiten erforderlich. Die Führung und Einrichtung der landwirtschaftlichen Verteilmaschine nach dem Ändern der Spurweite wird somit erheblich vereinfacht.

Es ist außerdem eine erfindungsgemäße Achsbaugruppe vorteilhaft, welche eine Verstelleinrichtung aufweist. Die Verstelleinrichtung ist mit den Anlenkkörpern der Einzelradaufhängungen verbunden. Mittels der Verstelleinrichtung ist der Abstand der Einzelradaufhängungen und/oder der Abstand der Anlenkkörper der Einzelradaufhängungen in Querrichtung einstellbar. Mit steigendem Abstand zwischen den Einzelradaufhängungen bzw. deren Anlenkkörpern vergrößert sich die Spurweite. Wenn der Abstand zwischen den Einzelradaufhängungen bzw. deren Anlenkkörpern verringert wird, verkleinert sich auch die Spurweite. Wenn der Abstand zwischen den Einzelradaufhängungen bzw. deren Anlenkkörpern erhöht wird, vergrößert sich auch die Spurweite. Die Verstelleinrichtung kann über einen manuellen Verstellmechanismus und/oder über einen Verstellantrieb verfügen, über welchen der Abstand der Einzelradaufhängungen und/oder deren Anlenkkörper in Querrichtung einstellbar ist. Mittels der Verstelleinrichtung lässt sich der Abstand zwischen den Einzelradaufhängungen und/oder deren Anlenkkörpern in Querrichtung um zumindest 500 mm, vorzugsweise zumindest 600 mm, besonders bevorzugt zumindest 700 mm verändern. Insbesondere weist die Verstelleinrichtung einen Verstellbereich von 750 mm auf.

Die erfindungsgemäße Achsbaugruppe wird ferner dadurch vorteilhaft weitergebildet, dass die Verstelleinrichtung dazu eingerichtet ist, die Anlenkkörper der Einzelradaufhängungen translatorisch in Querrichtung zu bewegen. Vorzugsweise erfolgt beim Bewegen der Anlenkkörper der Einzelradaufhängungen kein Verschwenken, Verdrehen oder Verkippen der Anlenkkörper. Vorzugsweise ist die Verstelleinrichtung dazu eingerichtet, die Anlenkkörper entlang eines gradlinigen Bewegungspfads linear zu bewegen. Mittels der Verstelleinrichtung können die Anlenkkörper einzeln oder gemeinsam, also gleichzeitig, bewegt werden. Vorzugsweise ist die Verstelleinrichtung dazu eingerichtet, die Anlenkkörper zum Verändern der Spurweite aufeinander zu und voneinander weg zu bewegen. Wenn die Anlenkkörper mittels der Verstelleinrichtung aufeinander zu bewegt werden, wird die Spurweite verringert. Wenn die Anlenkkörper mittels der Verstelleinrichtung voneinander weg bewegt werden, wird die Spurweite vergrößert.

In einer anderen bevorzugten Ausführungsform der erfindungsgemäßen Achsbaugruppe weist die Verstelleinrichtung eine Teleskopmechanik auf, wobei die Erstreckung der Teleskopmechanik in Querrichtung zum Einstellen der Spurweite veränderbar ist. Die Erstreckung der Teleskopmechanik in Querrichtung ist vorzugsweise zumindest um 500 mm, bevorzugt um zumindest 600 mm, besonders bevorzugt um zumindest 700 mm in Querrichtung veränderbar. Die Teleskopmechanik weist vorzugsweise einen Verstellbereich von 750 mm auf.

In einer weiteren bevorzugten Ausführungsform der erfindungsgemäßen Achsbaugruppe weist die Teleskopmechanik ineinanderschiebbare und/oder auseinanderziehbare Tragrohre auf. Die Tragrohre sind vorzugsweise an den Anlenkkörpern befestigt. Die Tragrohre und deren Lagerung befinden sich in einem gemeinsamen Achskörper. Der Achskörper ist vorzugsweise dazu eingerichtet, an einem Fahrgestell der landwirtschaftlichen Verteilmaschine befestigt zu werden. Das Fahrgestell, welches an dem Achskörper befestigbar ist, kann ein Fahrzeugrahmen sein. Über die Tragrohre kann die exakte Ausrichtung der Anlenkkörper zum Fahrgestell bzw. zum Fahrzeugrahmen eingestellt werden. Die Schnittstelle bzw. die Verbindung zwischen dem Achskörper und dem Fahrgestell kann durch eine Schraubverbindung realisiert werden. Alternativ oder zusätzlich kann der Achskörper auch mit dem Fahrgestell vernietet, verklebt, verschweißt oder auf eine andere Weise befestigt sein. Die Anlenkkörper sind an den freien, außenliegenden Enden der Tragrohre angeordnet. Die Tragrohre übertragen Längs- und Vertikalkräfte zwischen dem Fahrgestell und den Anlenkkörpern.

In einer weiteren bevorzugten Ausführungsform der erfindungsgemäßen Achsbaugruppe bilden die Tragrohre der Teleskopmechanik zwei nebeneinander angeordnete und sich jeweils in Querrichtung erstreckende Rohrgruppen. Vorzugsweise weist jede Rohrgruppe zumindest zwei Tragrohre mit unterschiedlichen Außenumfängen auf. Bei einer ersten Rohrgruppe ist das Tragrohr mit dem kleineren Außenumfang linksseitig und bei einer zweiten Rohrgruppe ist das Tragrohr mit dem kleineren Außenumfang rechtsseitig angeordnet. Vorzugsweise sind die Rohrgruppen in Bezug auf eine sich in Längsrichtung bzw. Fahrtrichtung erstreckende Vertikalebene spiegelverkehrt zueinander ausgebildet. Die Mittelachsen der beiden Rohrgruppen verlaufen vorzugsweise parallel zueinander. Die Tragrohre weisen vorzugsweise einen ringförmigen, insbesondere runden, Querschnitt auf, sodass das Tragrohr mit dem kleineren Außenumfang einen kleineren Außendurchmesser aufweist.

In einer Weiterbildung der erfindungsgemäßen Achsbaugruppe weist die Verstelleinrichtung einen steuerbaren Verstellantrieb auf, mittels welchem die Einzelradaufhängungen und/oder deren Anlenkkörper in Querrichtung verfahrbar sind. Der Verstellantrieb befindet sich vorzugsweise in dem Achskörper, in welchem auch die Tragrohre angeordnet sind. Der Verstellantrieb kann einen oder mehrere Verstellzylinder umfassen. Die Verstellzylinder können hydraulisch oder pneumatisch betätigte Zylinder sein. Über die Verstellzylinder können auch Querkräfte übertragen werden, indem die Verstellzylinder beispielsweise über Lageraugen am Achskörper und über Axialgelenke an den Anlenkkörpern angebunden sind. Der Achskörper umfasst vorzugsweise Anschlagflächen für die Verstellzylinder, über welche der Verfahrweg der Anlenkkörper beschränkt wird. Der Verstellantrieb kann auch ein elektrischer Antrieb sein, beispielsweise ein Linearmotor.

In einer besonders bevorzugten Ausführungsform der erfindungsgemäßen Achsbaugruppe ist an den Radträgern jeweils eine Spurstange angelenkt, wobei mit den Spurstangen verbundene Lenkzylinder an dem Querlenker oder an dem Anlenkkörper der jeweiligen Einzelradaufhängung befestigt sind. Über die Lenkzylinder und die Spurstangen sind die Radträger bzw. die an den Radträgern montierten Räder unabhängig voneinander lenkbar. Die Spurstangen und die Lenkzylinder sind vorzugsweise Bestandteil eines hydraulischen Lenksystems. Ein Querlenker, eine Feder-Dämpfer-Einheit, ein Radträger und ein Lenkzylinder samt Spurstange bilden vorzugsweise eine vormontierbare Montageeinheit.

Es ist ferner eine erfindungsgemäße Achsbaugruppe vorteilhaft, bei welcher die Spurstangen und Lenkzylinder derart angelenkt bzw. befestigt sind, dass bei einer Verstellung der Spurweite die Ausrichtung der Spurstangen und der Lenkzylinder erhalten bleibt. Dadurch, dass bei einer Verstellung der Spurweite die Ausrichtung der Spurstangen und der Lenkzylinder erhalten bleibt, verursacht die Spurweitenverstellung keinen Lenkeingriff und hat auch keinen Einfluss auf das Lenkverhalten.

In einer weiteren bevorzugten Ausführungsform der erfindungsgemäßen Achsbaugruppe verlaufen die Spurstangen jeweils in einer Ebene, in welcher auch ein Traggelenk zwischen dem Radträger und dem Querlenker der jeweiligen Einzelradaufhängung angeordnet ist. An den Enden der Spurstangen sind vorzugsweise Spurstangengelenke angeordnet, sodass die Spurstangengelenke und das Traggelenk einer Einzelradaufhängung ein Dreieck bilden, sodass beim Ein- und Ausfedern nur minimale Spuränderungen auftreten. Da sich der Lenkzylinder inklusive der Spurstangengelenke mit dem Querlenker beim Ein- und Ausfedern mitbewegt, entstehen während des Federvorgangs kaum Spuränderungen.

In einer vorteilhaften Weiterbildung der erfindungsgemäßen Achsbaugruppe sind die Querlenker als Dreieckslenker ausgebildet und jeweils über zwei Gelenke mit dem Anlenkkörper und über ein Gelenk mit dem Radträger verbunden. Das Gelenk zwischen dem Querlenker und dem Radträger ist vorzugsweise ein Kugelgelenk.

In einer weiteren vorteilhaften Weiterbildung der erfindungsgemäßen Achsbaugruppe umfasst die Verstelleinrichtung, insbesondere der Verstellantrieb, zumindest einen mit wenigstens einem der Anlenkkörper verbundenen Linearantrieb, insbesondere einen Hydraulikzylinder, wobei der Linearantrieb dazu eingerichtet ist, wenigstens einen der Anlenkkörper in Querrichtung zu verschieben. Die Anlenkkörper sind über den wenigstens einen Linearantrieb vorzugsweise stufenlos zueinander verstellbar. Der wenigstens eine Linearantrieb ist besonders bevorzugt einerseits, insbesondere unmittelbar, mit dem Anlenkkörper und andererseits mit dem Achskörper und/oder dem Fahrgestell verbunden. Der wenigstens eine Linearantrieb ist ferner bevorzugt mit seiner Längsachse zumindest nahezu korrespondierend, insbesondere parallel, zur Querrichtung angeordnet und/oder ausgerichtet. Darüber hinaus ist ein Antriebspaar aus wenigstens zwei Linearantrieben bevorzugt, wobei ein erster Linearantrieb mit einem der Anlenkkörper und ein zweiter Linearantrieb, insbesondere in einer zum ersten Linearantrieb entgegengesetzten Richtung, mit einem anderen Anlenkkörper verbunden ist. Alternativ oder zusätzlich hierzu kann der Linearantrieb auch als elektrisch verstellbarer, insbesondere als elektromotorischer, Linearantrieb ausgebildet sein.

Die der Erfindung zugrundeliegende Aufgabe wird ferner durch eine landwirtschaftliche Verteilmaschine der eingangs genannten Art gelöst, wobei das Fahrwerk der erfindungsgemäßen landwirtschaftlichen Verteilmaschine zumindest eine Achsbaugruppe nach einer der vorstehend beschriebenen Ausführungsformen aufweist. Hinsichtlich der Vorteile und Modifikationen der erfindungsgemäßen landwirtschaftlichen Verteilmaschine wird zunächst auf die Vorteile und Modifikationen der erfindungsgemäßen Achsbaugruppe verwiesen.

Die landwirtschaftliche Verteilmaschine ist vorzugsweise eine Feldspritze, welche zum Ausbringen von Spritzflüssigkeit einsetzbar ist. Die landwirtschaftliche Verteilmaschine kann eine selbstfahrende landwirtschaftliche Verteilmaschine sein. Die landwirtschaftliche Verteilmaschine kann eine feste oder eine variable und somit einstellbare Bodenfreiheit aufweisen. Die feste Bodenfreiheit kann beispielsweise bei 1600 mm liegen. Wenn die landwirtschaftliche Verteilmaschine eine variable Bodenfreiheit aufweist, kann die Verteilmaschine eine hydraulische Bodenfreiheits-Verstelleinrichtung umfassen, mittels welcher die Bodenfreiheit innerhalb von vorgegebenen Einstellgrenzen verringert und vergrößert werden kann.

In einer bevorzugten Ausführungsform der erfindungsgemäßen Verteilmaschine ist zwischen dem Fahrgestell und der Achsbaugruppe, insbesondere dem Anlenkkörper, wenigstens eine Gleitführung, vorzugsweise nach Art einer C-Profil-Schiene, angeordnet, wobei insbesondere der Anlenkkörper zumindest abschnittsweise entlang der Gleitführung geführt ist. Die Gleitführung ist bevorzugt am Fahrgestell angeformt und/oder mit dem Fahrgestell verbunden, wobei wenigstens einer der Anlenkkörper zumindest teilweise von der Gleitführung umschlossen ist. Besonders bevorzugt sind Anlenkkörper und Gleitführung kraftübertragend, insbesondere drehmomentübertragend, miteinander verbunden. Die Gleitführung ist ferner bevorzugt korrespondierend, insbesondere zumindest nahezu parallel, zur Querrichtung, insbesondere zur Bewegungsrichtung der Anlenkkörper, ausgebildet. Mit einer derartigen Ausführungsform ist die Stabilität der Verteilmaschine, insbesondere der Achsbaugruppen, in besonders einfacher Weise erhöht.

Die erfindungsgemäße Verteilmaschine wird ferner dadurch vorteilhaft weitergebildet, dass zwischen dem Fahrgestell und der Achsbaugruppe, insbesondere dem Anlenkkörper, wenigstens eine längenveränderliche Hebeleinrichtung, vorzugsweise nach Art eines Kniehebels und/oder von Klapphebeln, derart angeordnet ist, dass beim Bewegen der Anlenkkörper in Querrichtung die Länge der Hebeleinrichtung in Querrichtung gesehen veränderbar ist. Die Hebeleinrichtung ist hierbei dazu eingerichtet, seine aktuelle Länge in Querrichtung gesehen korrespondierend mit der Bewegung wenigstens einer der Anlenkkörper und damit mit der Spurweitenverstellung zu verändern. Eine zumindest teilweise schwenkbare und/oder klappbare Hebeleinrichtung ist dabei besonders bevorzugt. Die wenigstens eine Hebeleinrichtung ist besonders bevorzugt einerseits, insbesondere unmittelbar, mit dem Anlenkkörper und andererseits mit dem Achskörper und/oder dem Fahrgestell verbunden. Die Hebeleinrichtung ist insbesondere derart angeordnet, dass in die Achsbaugruppe einleitbare Kräfte, insbesondere Drehmomente, zumindest teilweise von der Hebeleinrichtung aufnehmbar und/oder an das Fahrgestell übertragbar sind.

In einer Weiterbildung der erfindungsgemäßen Achsbaugruppe umfasst die Hebeleinrichtung wenigstens einen mit dem Fahrgestell verbundenen ersten Stützhebel und wenigstens einen mit der Achsbaugruppe, insbesondere dem Anlenkkörper, verbundenen zweiten Stützhebel, wobei die Stützhebel drehbar und/oder klappbar miteinander verbunden sind. Zwischen den Stützhebeln wird vorzugsweise ein Klappwinkel eingeschlossen, der korrespondierend zur Länge der Hebeleinrichtung in Querrichtung gesehen anpassbar ist. Die Stützhebel sind vorzugsweise jeweils mit einer ihrer Seiten bzw. Enden drehbar und/oder schwenkbar aneinander angeordnet. Darüber hinaus sind bevorzugt jeweils der erste Stützhebel am Achskörper und/oder Fahrgestell und der zweite Stützhebel an einem der Anlenkkörper schwenkbar angelenkt.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel der erfindungsgemäßen Achsbaugruppe in einer perspektivischen Darstellung;
- Fig. 2: die in der Fig. 1 abgebildete Achsbaugruppe in einer Frontansicht;
- Fig. 3: eine erfindungsgemäße Achsbaugruppe samt Fahrgestell und Rädern in einer Draufsicht;
- Fig. 4: ein Ausführungsbeispiel der erfindungsgemäßen Achsbaugruppe in einer perspektivischen Darstellung, wobei eine minimale Spurweite eingestellt ist;
- Fig. 5: die in der Fig. 4 abgebildete Achsbaugruppe in einer perspektivischen Darstellung, wobei eine maximale Spurweite eingestellt ist;
- Fig. 6: ein Ausführungsbeispiel der erfindungsgemäßen Achsbaugruppe in einer Ansicht von unten; und
- Fig. 7: Tragrohre einer Teleskopmechanik einer erfindungsgemäßen Achsbaugruppe in einer Schnittdarstellung;
- Fig. 8: ein weiteres Ausführungsbeispiel der erfindungsgemäßen Achsbaugruppe in einer perspektivischen Darstellung;
- Fig. 9: die in der Fig. 8 abgebildete Achsbaugruppe in einer weiteren Frontansicht; und
- Fig. 10: ein anderes weiteres Ausführungsbeispiel der erfindungsgemäßen Achsbaugruppe in einer Ansicht von unten.

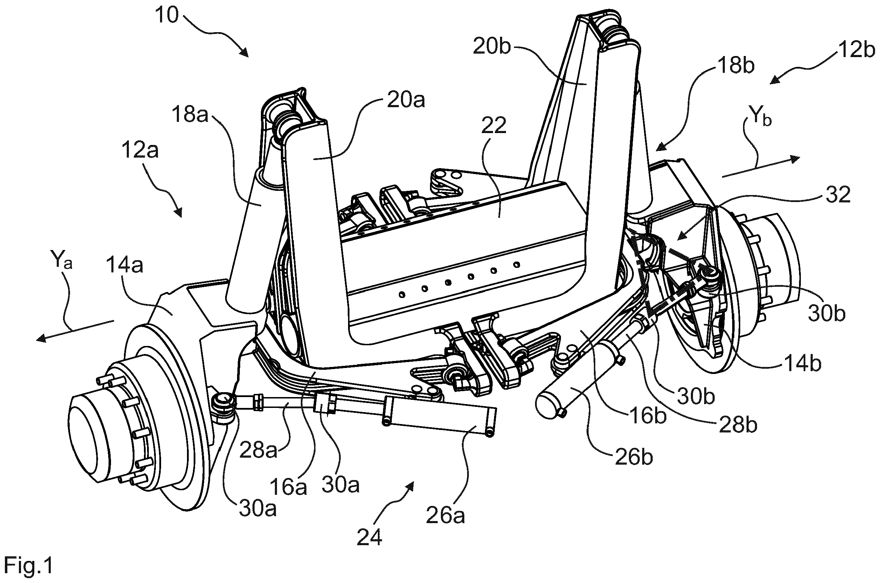

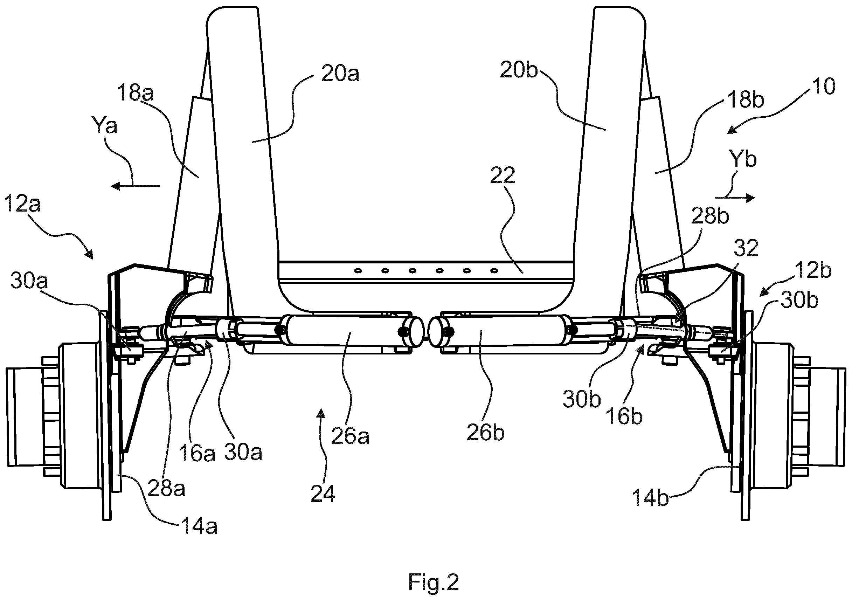

Die Fig. 1 und 2 zeigen eine Achsbaugruppe 10 mit verstellbarer Spurweite. Die Achsbaugruppe 10 kann als Hinterachse und/oder als Frontachse einer landwirtschaftlichen Verteilmaschine 100, beispielsweise einer Feldspritze, eingesetzt werden.

Die Achsbaugruppe 10 weist zwei Einzelradaufhängungen 12a, 12b auf, wobei die Einzelradaufhängungen 12a, 12b McPherson-Federbein-Radaufhängungen sind.

Die Einzelradaufhängungen 12a, 12b weisen jeweils einen Radträger 14a, 14b auf, an welchen jeweils ein Rad 104a, 104b der Verteilmaschine 100 montierbar ist. Die Radträger 14a, 14b sind jeweils mit einem Querlenker 16a, 16b und einer Feder-Dämpfer-Einheit 18a, 18b verbunden. Die Querlenker 16a, 16b sind als Dreieckslenker ausgebildet und über ein Gelenk mit dem jeweiligen Radträger 14a, 14b verbunden. Die Gelenke zwischen den Querlenkern 16a, 16b und den Radträgern 14a, 14b sind Kugelgelenke. Die Feder-Dämpfer-Einheiten 18a, 18b sind hydropneumatische Federungszylinder und dienen zur Stoß- und Schwingungsminderung und zur Radführung. Die Feder-Dämpfer-Einheiten 18a, 18b sind starr und unbeweglich an dem jeweiligen Radträger 14a, 14b befestigt.

Die Einzelradaufhängungen 12a, 12b weisen ferner jeweils einen Anlenkkörper 20a, 20b auf, an welchem der Querlenker 16a, 16b und die Feder-Dämpfer-Einheit 18a, 18b der jeweiligen Einzelradaufhängung 12a, 12b angelenkt sind. Die als Dreieckslenker ausgebildeten Querlenker 16a, 16b sind jeweils über zwei Gelenke mit den Anlenkkörpern 20a, 20b verbunden. Die Anlenkkörper 20a, 20b sind einstückige starre Körper, welche auch als Integralträger bezeichnet werden können.

Die Anlenkkörper 20a, 20b sind zum Ändern der Spurweite in Querrichtung yₐ, y_{b} bewegbar. Bei einer Spurweitenverstellung werden somit die gesamten Einzelradaufhängungen 12a, 12b in Querrichtung yₐ, y_{b} verfahren. Die Querlenker 16a, 16b und die Feder-Dämpfer-Einheiten 18a, 18b sind derart an dem jeweiligen Anlenkkörper 20a, 20b angelenkt, dass beim Bewegen der Anlenkkörper 20a, 20b in Querrichtung yₐ, y_{b} zum Ändern der Spurweite die Neigungsausrichtung der Feder-Dämpfer-Einheiten 18a, 18b erhalten bleibt. Die Spurweitenverstellung führt somit nicht zu einem geänderten Federungs- und/oder Dämpfungsverhalten der Achsbaugruppe 10.

Zwischen den Anlenkkörpern 20a, 20b befindet sich ein Achskörper 22, welcher eine Verstelleinrichtung 34 zum Einstellen des Abstands zwischen den Anlenkkörpern 20a, 20b umfasst.

Die Achsbaugruppe 10 umfasst ferner ein hydraulisches Lenksystem 24. An den Radträgern 14a, 14b der Einzelradaufhängungen 12a, 12b ist jeweils eine Spurstange 28a, 28b des Lenksystems 24 angelenkt. Die Spurstangen 28a, 28b sind mit Lenkzylindern 26a, 26b des Lenksystems 24 verbunden. Die Lenkzylinder 26a, 26b sind an dem Querlenker 16a, 16b der jeweiligen Einzelradaufhängung 12a, 12b befestigt. Die Spurstangen 28a, 28b und die Lenkzylinder 26a, 26b sind derart angelenkt, dass bei einer Verstellung der Spurweite die Ausrichtung der Spurstangen 28a, 28b und die Ausrichtung der Lenkzylinder 26a, 26b erhalten bleibt. Die Spurstangen 28a, 28b verlaufen jeweils in einer Ebene, in welcher auch das Traggelenk zwischen dem Radträger 14a, 14b und dem Querlenker 16a, 16b der jeweiligen Einzelradaufhängung 12a, 12b angeordnet ist. Somit bilden das Traggelenk und die Spurstangengelenke 30a, 30b ein Dreieck 32, sodass beim Ein- und Ausfedern nur minimale Spuränderungen auftreten.

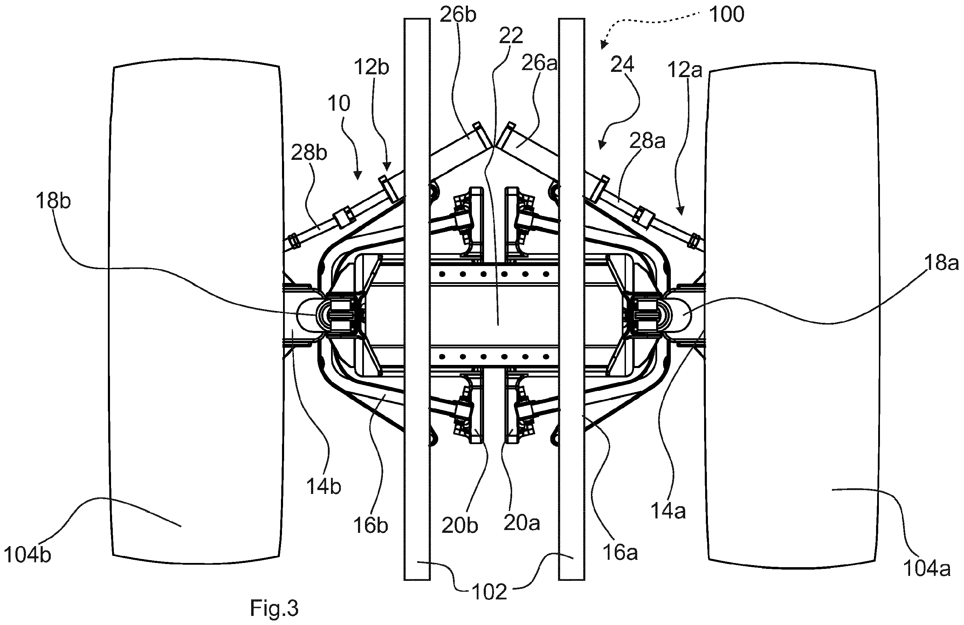

Die Fig. 3 zeigt Teile einer als Feldspritze ausgebildeten landwirtschaftlichen Verteilmaschine 100. Die Verteilmaschine 100 umfasst ein Fahrgestell 102 und ein Fahrwerk mit verstellbarer Spurweite, mit welchem das Fahrgestell 102 verbunden ist. Das Fahrwerk weist eine Achsbaugruppe 10 auf. Die Achsbaugruppe 10 kann beispielsweise gemäß der in den Fig. 1 und 2 dargestellten Ausführungsform ausgebildet sein. Das Fahrgestell 102 ist an dem Achskörper 22 der Achsbaugruppe 10 befestigt. Das Fahrgestell 102 kann ein Fahrzeugrahmen der Verteilmaschine 100 sein.

An den Radträgern 14a, 14b der Einzelradaufhängungen 12a, 12b sind Räder 104a, 104b montiert.

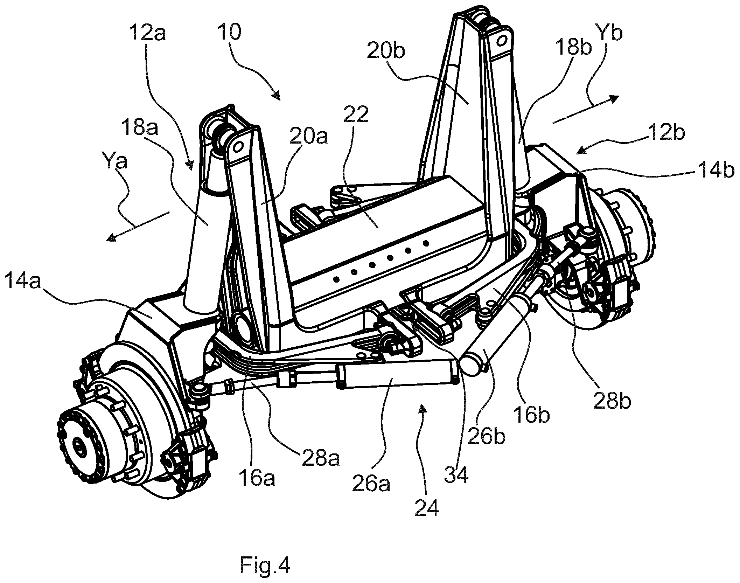

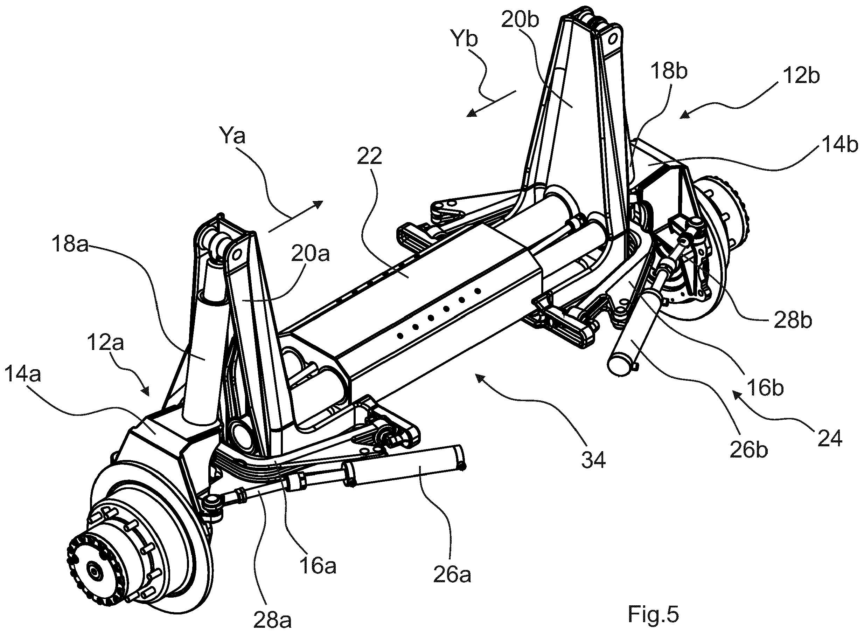

Die Fig. 4 und 5 zeigen, dass die Achsbaugruppe 10 eine Verstelleinrichtung 34 umfasst, mittels welcher der Abstand der Einzelradaufhängungen 12a, 12b und deren Anlenkkörper 20a, 20b in Querrichtung yₐ, y_{b} einstellbar ist. Bei dem in der Fig. 4 dargestellten Zustand der Achsbaugruppe 10 ist der minimal einstellbare Abstand zwischen den Einzelradaufhängungen 12a, 12b und deren Anlenkkörpern 20a, 20b eingestellt, sodass die Achsbaugruppe 10 die minimale Spurweite aufweist. Bei dem in der Fig. 5 dargestellten Zustand ist der maximal einstellbare Abstand zwischen den Einzelradaufhängungen 12a, 12b und deren Anlenkkörpern 20a, 20b eingestellt, sodass die Achsbaugruppe 10 die maximale Spurweite aufweist.

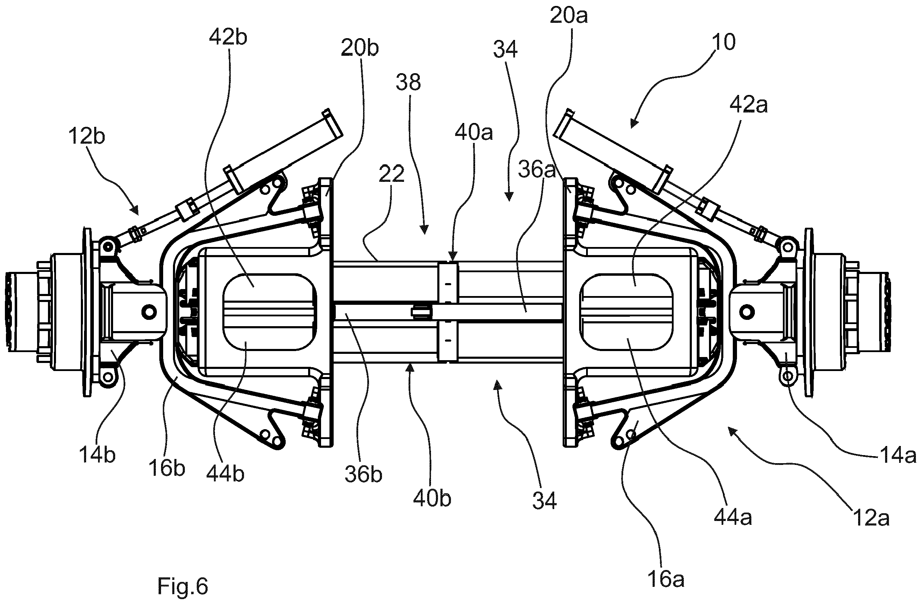

Die Fig. 6 zeigt, dass die Verstelleinrichtung 34 einen zwei Verstellzylinder 36a, 36b aufweisenden steuerbaren Verstellantrieb aufweist. Mittels des Verstellantriebs sind die Einzelradaufhängungen 12a, 12b und deren Anlenkkörper 20a, 20b in Querrichtung yₐ, y_{b} verfahrbar. Über die Verstellzylinder 36a, 36b ist die Verstelleinrichtung 34 dazu eingerichtet, die Anlenkkörper 20a, 20b der Einzelradaufhängung 12a, 12b translatorisch in Querrichtung yₐ, y_{b} zu bewegen. Dabei können die Anlenkkörper 20a, 20b mittels der Verstelleinrichtung 34 zum Verändern der Spurweite aufeinander zu und voneinander weg bewegt werden. Die Verstellzylinder 36a, 36b können beispielsweise hydraulische oder pneumatische Verstellzylinder sein. Der Verstellantrieb befindet sich in einem Achskörper 22, in welchem auch Tragrohre 42a, 42b, 44a, 44b einer Teleskopmechanik 38 angeordnet sind. Der Achskörper 22 umfasst Anschlagsflächen für die Verstellzylinder 36a, 36b, über welche der Verfahrweg der Anlenkkörper 20a, 20b begrenzt wird. Die Erstreckung der Teleskopmechanik 38 in Querrichtung ist zum Einstellen der Spurweite veränderbar.

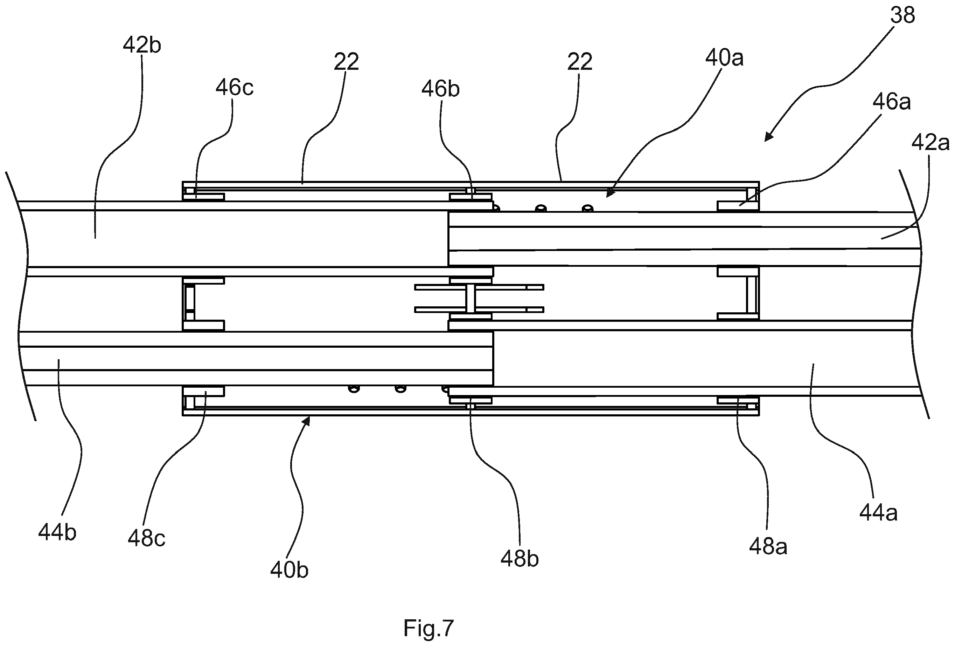

Die Fig. 7 zeigt, dass die Tragrohre 42a, 42b, 44a, 44b der Teleskopmechanik 38 ineinanderschiebbar und auseinanderziehbar sind. An dem Achskörper 22 sind Lager 46a-46c, 48a-48c für die Tragrohre 42a, 42b, 44a, 44b befestigt. Die Tragrohre 42a, 42b, 44a, 44b der Teleskopmechanik 38 bilden zwei nebeneinander angeordnete und sich jeweils in Querrichtung erstreckende Rohrgruppen 40a, 40b aus. Die Mittelachsen der beiden Rohrgruppen 40a, 40b verlaufen in Querrichtung und parallel zueinander. Die Rohrgruppe 40a umfasst die Tragrohre 42a, 42b. Die Tragrohre 42a, 42b weisen unterschiedliche Außendurchmesser auf. Die Rohrgruppe 40b umfasst die Tragrohre 44a, 44b. Die Tragrohre 44a, 44b weisen unterschiedliche Außendurchmesser auf. Bei der Rohrgruppe 40a ist das Tragrohr 42a mit dem kleineren Außendurchmesser auf einer ersten Seite angeordnet. Bei der Rohrgruppe 40b ist das Tragrohr 44b mit dem kleineren Außendurchmesser auf der gegenüberliegenden Seite angeordnet. Durch die spiegelverkehrte Anordnung der Tragrohre 42a, 42b, 44a, 44b kann eine bauraumsparende und ausbalancierte Teleskopmechanik 38 umgesetzt werden.

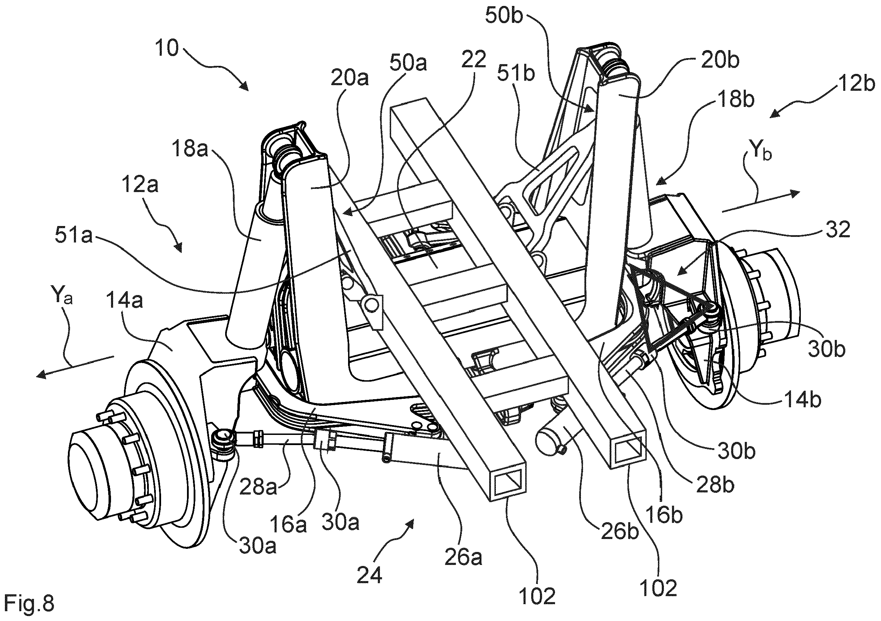

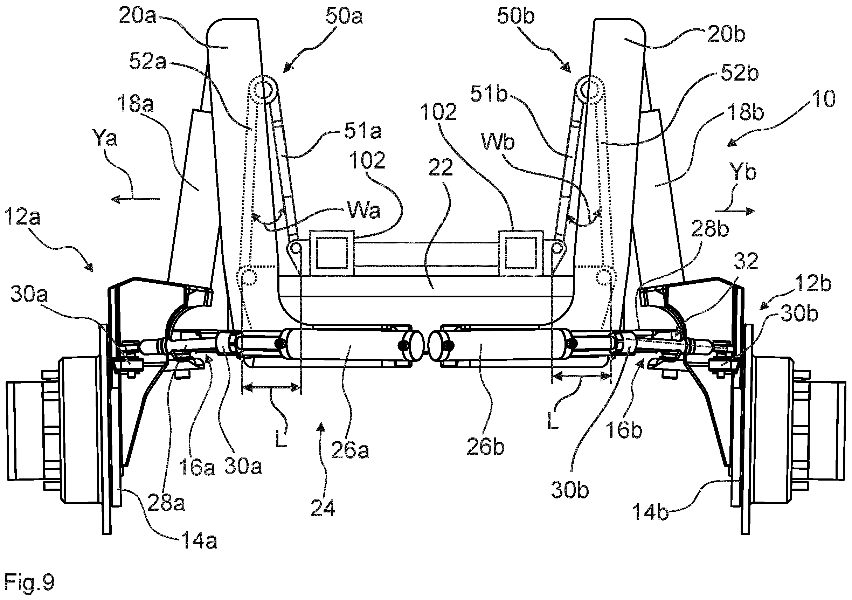

Die Fig. 8 und 9 zeigen eine weitere erfindungsgemäße Achsbaugruppe 10 mit verstellbarer Spurweite. Das Grundprinzip und/oder die Funktionsweise dieser Ausführungsform entspricht hierbei zumindest im Wesentlichen dem eingangs beschriebenen Ausführungsbeispiel der Achsbaugruppe 10. Die hier gezeigte Achsbaugruppe 10 umfasst des Weiteren wenigstens eine längenveränderliche Hebeleinrichtung 50a, 50b, die insbesondere nach Art eines Knie- und/oder Klapphebels ausgebildet ist und, derart angeordnet ist, dass beim Bewegen der Anlenkkörper 20a, 20b in Querrichtung yₐ, y_{b} die Länge L der Hebeleinrichtung 50a, 50b in Querrichtung yₐ, y_{b} gesehen veränderbar ist. Insbesondere ist hierbei eine der Hebeleinrichtungen 50a einem der Anlenkkörper 20a zugeordnet, während eine andere Hebeleinrichtung 50b dem anderen Anlenkkörper 20b zugeordnet ist.

Die jeweiligen Hebeleinrichtungen 50a, 50b sind hierbei ferner dazu eingerichtet, deren eingestellte Länge L in Querrichtung yₐ, y_{b} gesehen korrespondierend mit der Bewegung der Anlenkkörper 20a, 20b und damit mit der Spurweitenverstellung zu verändern. Hierzu ist jede der Hebeleinrichtungen 50a, 50b einerseits, insbesondere unmittelbar, mit dem jeweiligen zugeordneten Anlenkkörper 20a, 20b und andererseits mit dem Achskörper 22 und/oder dem Fahrgestell 102 verbunden.

Eine jeweilige Hebeleinrichtung 50a, 50b wird in diesem Ausführungsbeispiel aus einem mit dem Fahrgestell 102 und/oder dem Achskörper 22 verbundenen ersten Stützhebel 51a, 51b und wenigstens einem mit der Achsbaugruppe 10, insbesondere dem Anlenkkörper 20a, 20b, verbundenen zweiten Stützhebel 52a, 52b gebildet. Die jeweiligen Stützhebel 51a-52b einer Hebeleinrichtung 50a, 50b sind ferner schwenkbar und/oder drehbar mit einem ihrer Enden aneinander angelenkt. Hierbei wird zwischen den Stützhebeln 51a-52b einer Hebeleinrichtung 50a, 50b ein mit der Spurweite veränderlicher Klappwinkel Wa, Wb der Hebeleinrichtung 50a, 50b eingeschlossen. In der in der Fig. 8 gezeigten Stellung der Achsbaugruppe 10 sind die jeweiligen Hebeleinrichtungen 50a, 50b teilweise auseinander geklappt.

Bei dem in der Fig. 9 dargestellten Zustand der Achsbaugruppe 10 ist der minimal einstellbare Abstand zwischen den Einzelradaufhängungen 12a, 12b und deren Anlenkkörpern 20a, 20b eingestellt, sodass die Achsbaugruppe 10 die minimale Spurweite aufweist. Es ist zu sehen, dass die jeweiligen Hebeleinrichtungen 50a, 50b zumindest nahezu vollständig zusammengeklappt, insbesondere aneinander eingeschwenkt, sind und die Länge der jeweiligen Hebeleinrichtungen 50a, 50b in Querrichtung yₐ, y_{b} gesehen minimal ist.

Die Hebeleinrichtungen 50a, 50b sind über deren Stützhebel 51a-52b sowohl an den Anlenkkörpern 20a, 20b als auch an dem Fahrgestell 102 und/oder dem Achskörper 22 drehbar und/oder schwenkbar angelenkt. Somit werden die Hebeleinrichtungen 50a, 50b beim Ausfahren der Anlenkkörper 20a, 20b auseinander geklappt und der Klappwinkel Wa, Wb zwischen den Stützhebeln 51a-52b vergrößert. Anders herum werden die Hebeleinrichtungen 50a, 50b beim Einfahren der Anlenkkörper 20a, 20b zusammengeklappt und der Klappwinkel Wa, Wb zwischen den Stützhebeln 51a-52b verkleinert.

Die während der Fahrt in die Achsbaugruppe 10 einleitbaren Kräfte, insbesondere Drehmomente, sind ferner von den Hebeleinrichtungen 50a, 50b zumindest teilweise aufnehmbar und/oder an das Fahrgestell 102 und/oder den Achskörper 22 übertragbar.

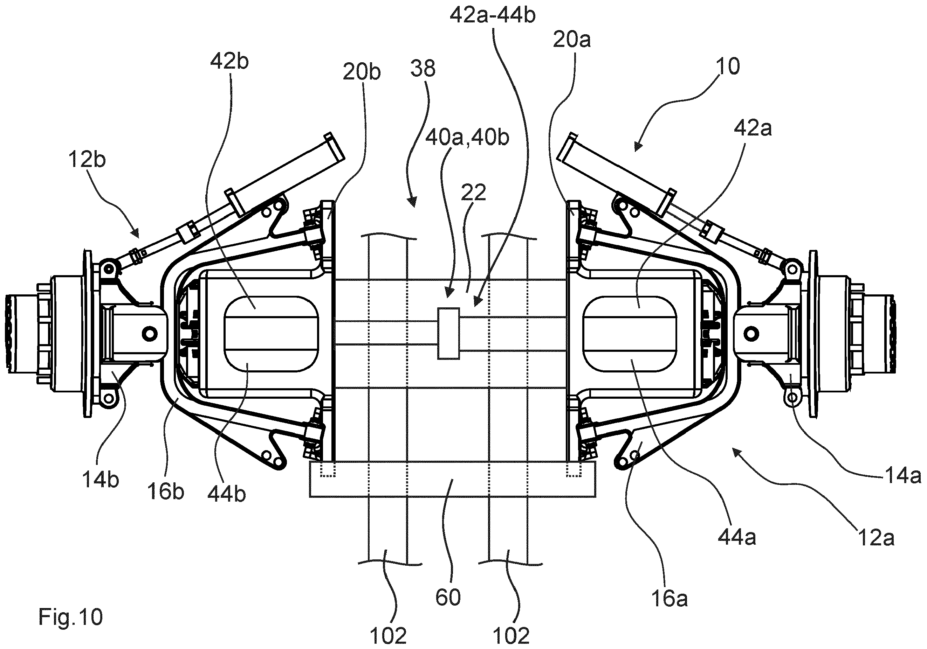

Ein weiteres Ausführungsbeispiel der Achsbaugruppe ist in der Fig. 10 gezeigt. Hier ist eine zwischen dem Fahrgestell 102 und der Achsbaugruppe 10, insbesondere dem Anlenkkörper 20a, 20b, angeordnete alternative und/oder zusätzliche Gleitführung 60 zu sehen. Die Gleitführung 60 ist hierbei insbesondere nach Art einer C-Profil-Schiene ausgebildet und dazu eingerichtet, während der Fahrt in die Achsbaugruppe 10 einleitbaren Kräfte, insbesondere Drehmomente, zumindest teilweise aufzunehmen und/oder zu übertragen.

Die Gleitführung 60 ist hierbei ferner quer zum Fahrgestell 102 und/oder korrespondierend zur Quer- und/oder Bewegungsrichtung yₐ, y_{b} der Achsbaugruppe 10, insbesondere der Anlenkkörper 20a, 20b ausgebildet. Des Weiteren wird wenigstens einer der Anlenkkörper 20a, 20b zumindest teilweise von der Gleitführung 60 umschlossen und bei der Bewegung in Querrichtung yₐ, y_{b} bzw. bei Veränderung der Spurweite zumindest abschnittsweise von der Gleitführung 60 geführt.

Die in der Fig. 10 nicht gezeigte Verstelleinrichtung 34 umfasst in diesem Ausführungsbeispiel wenigstens einen mit einem der Anlenkkörper 20a, 20b verbundenen Linearantrieb, der insbesondere als längenveränderlicher Hydraulikzylinder ausgebildet und von außen am Achskörper 22 angeordnet ist. Der Linearantrieb ist dazu eingerichtet, den wenigstens einen damit verbundenen Anlenkkörper 20a, 20b in Querrichtung yₐ, y_{b} stufenlos zu verschieben.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

### Bezugszeichen

- 10: Achsbaugruppe
- 12a, 12b: Einzelradaufhängungen
- 14a, 14b: Radträger
- 16a, 16b: Querlenker
- 18a, 18b: Feder-Dämpfer-Einheiten
- 20a, 20b: Anlenkkörper
- 22: Achskörper
- 24: Lenksystem
- 26a, 26b: Lenkzylinder
- 28a, 28b: Spurstangen
- 30a, 30b: Spurstangengelenke
- 32: Dreieck
- 34: Verstelleinrichtung
- 36a, 36b: Verstellzylinder
- 38: Teleskopmechanik
- 40a, 40b: Rohrgruppen
- 42a, 42b: Tragrohre
- 44a, 44b: Tragrohre
- 46a-46c: Lager
- 48a-48c: Lager
- 50a, 50b: Hebeleinrichtung
- 51a, 51b: erster Stützhebel
- 52a, 52b: zweiter Stützhebel
- 60: Gleitführung

- 100: Verteilmaschine
- 102: Fahrgestell
- 104a, 104b: Räder

- L: Länge der Hebeleinrichtung
- Wa, Wb: Klappwinkel
- yₐ, y_{b}: Bewegungsrichtungen

## Patentansprüche

1. Achsbaugruppe (10) mit verstellbarer Spurweite für eine landwirtschaftliche Verteilmaschine (100), mit
- zwei Einzelradaufhängungen (12a, 12b), wobei die Einzelradaufhängungen (12a, 12b) jeweils einen Radträger (14a, 14b) aufweisen, welcher mit einem Querlenker (16a, 16b) und einer Feder-Dämpfer-Einheit (18a, 18b) verbunden ist, und wobei die Einzelradaufhängungen (12a, 12b) jeweils einen Anlenkkörper (20a, 20b) aufweisen, an welchem der Querlenker (16a, 16b) und die Feder-Dämpfer-Einheit (18a, 18b) der jeweiligen Einzelradaufhängung (12a, 12b) angelenkt sind;
**dadurch gekennzeichnet, dass** die Anlenkkörper (20a, 20b) zum Ändern der Spurweite in Querrichtung (yₐ, y_{b}) bewegbar sind.

2. Achsbaugruppe (10) nach Anspruch 1,
**dadurch gekennzeichnet, dass** die Querlenker (16a, 16b) und die Feder-Dämpfer-Einheiten (18a, 18b) derart an dem jeweiligen Anlenkkörper (20a, 20b) angelenkt sind, dass beim Bewegen der Anlenkkörper (20a, 20b) in Querrichtung (yₐ, y_{b}) zum Ändern der Spurweite die Neigungsausrichtung der Feder-Dämpfer-Einheiten (18a, 18b) erhalten bleibt.

3. Achsbaugruppe (10) nach Anspruch 1 oder 2,
**gekennzeichnet durch** eine Verstelleinrichtung (34), welche mit den Anlenkkörpern (20a, 20b) der Einzelradaufhängungen (12a, 12b) verbunden ist und mittels welcher der Abstand der Einzelradaufhängungen (12a, 12b) und/oder deren Anlenkkörper (20a, 20b) in Querrichtung (yₐ, y_{b}) einstellbar ist.

4. Achsbaugruppe (10) nach Anspruch 3,
**dadurch gekennzeichnet, dass** die Verstelleinrichtung (34) dazu eingerichtet ist, die Anlenkkörper (20a, 20b) der Einzelradaufhängungen (12a, 12b) translatorisch in Querrichtung (yₐ, y_{b}) zu bewegen.

5. Achsbaugruppe (10) nach Anspruch 3 oder 4,
**dadurch gekennzeichnet, dass** die Verstelleinrichtung (34) eine Teleskopmechanik (38) aufweist, wobei die Erstreckung der Teleskopmechanik (38) in Querrichtung zum Einstellen der Spurweite veränderbar ist.

6. Achsbaugruppe (10) nach Anspruch 5,
**dadurch gekennzeichnet, dass** die Teleskopmechanik (38) ineinanderschiebbare und/oder auseinanderziehbare Tragrohre (42a, 42b, 44a, 44b) aufweist.

7. Achsbaugruppe (10) nach Anspruch 6,
**dadurch gekennzeichnet, dass** die Tragrohre (42a, 42b, 44a, 44b) der Teleskopmechanik (38) zwei nebeneinander angeordnete und sich jeweils in Querrichtung erstreckende Rohrgruppen (40a, 40b) bilden, wobei jede Rohrgruppe (40a, 40b) zumindest zwei Tragrohre (42a, 42b, 44a, 44b) mit unterschiedlichen Außenumfängen aufweist, wobei bei einer ersten Rohrgruppe (40a) das Tragrohr (42a) mit dem kleineren Außenumfang linksseitig und bei einer zweiten Rohrgruppe (40b) das Tragrohr (44b) mit dem kleineren Außenumfang rechtsseitig angeordnet ist.

8. Achsbaugruppe (10) nach einem der Ansprüche 3 bis 7,
**dadurch gekennzeichnet, dass** die Verstelleinrichtung (34) einen steuerbaren Verstellantrieb aufweist, mittels welchem die Einzelradaufhängungen (12a, 12b) und/oder deren Anlenkkörper (20a, 20b) in Querrichtung (yₐ, y_{b}) verfahrbar sind.

9. Achsbaugruppe (10) nach einem der vorstehenden Ansprüche,
**dadurch gekennzeichnet, dass** an den Radträgern (14a, 14b) jeweils eine Spurstange (28a, 28b) angelenkt ist, wobei mit den Spurstangen (28a, 28b) verbundene Lenkzylinder (26a, 26b) an dem Querlenker (16a, 16b) oder an dem Anlenkkörper (20a, 20b) der jeweiligen Einzelradaufhängung befestigt sind.

10. Achsbaugruppe (10) nach Anspruch 9,
**dadurch gekennzeichnet, dass** die Spurstangen (28a, 28b) und Lenkzylinder (26a, 26b) derart angelenkt bzw. befestigt sind, dass bei einer Verstellung der Spurweite die Ausrichtung der Spurstangen (28a, 28b) und Lenkzylinder (26a, 26b) erhalten bleibt.

11. Achsbaugruppe (10) nach Anspruch 10,
**dadurch gekennzeichnet, dass** die Spurstangen (28a, 28b) jeweils in einer Ebene verlaufen, in welcher auch ein Traggelenk zwischen dem Radträger (14a, 14b) und dem Querlenker (16a, 16b) der jeweiligen Einzelradaufhängung (12a, 12b) angeordnet ist.

12. Achsbaugruppe (10) nach einem der vorstehenden Ansprüche,
**dadurch gekennzeichnet, dass** die Querlenker (16a, 16b) als Dreieckslenker ausgebildet sind und jeweils über zwei Gelenke mit dem Anlenkkörper (20a, 20b) und über ein Gelenk mit dem Radträger (14a, 14b) verbunden sind.

13. Achsbaugruppe (10) nach Anspruch 8,
**dadurch gekennzeichnet, dass** die Verstelleinrichtung (34), insbesondere der Verstellantrieb, zumindest einen mit wenigstens einem der Anlenkkörper (20a, 20b) verbundenen Linearantrieb, insbesondere einen Hydraulikzylinder, umfasst, wobei der Linearantrieb dazu eingerichtet ist, wenigstens einen der Anlenkkörper (20a, 20b) in Querrichtung (yₐ, y_{b}) zu verschieben.

14. Landwirtschaftliche Verteilmaschine (100), insbesondere Feldspritze, mit
- einem Fahrgestell (102); und
- einem Fahrwerk mit verstellbarer Spurweite, mit welchem das Fahrgestell (102) verbunden ist;
**dadurch gekennzeichnet, dass** das Fahrwerk zumindest eine Achsbaugruppe (10) nach einem der vorstehenden Ansprüche 1 bis 12 aufweist.

15. Landwirtschaftliche Verteilmaschine (100) nach Anspruch 14,
**dadurch gekennzeichnet, dass** zwischen dem Fahrgestell (102) und der Achsbaugruppe (10), insbesondere dem Anlenkkörper (20a, 20b), wenigstens eine Gleitführung, vorzugsweise nach Art einer C-Profil-Schiene, angeordnet ist, und insbesondere der Anlenkkörper (20a, 20b) zumindest abschnittsweise entlang der Gleitführung geführt ist.

16. Landwirtschaftliche Verteilmaschine (100) nach zumindest einem der vorstehenden Ansprüche 14 und/oder 15 ,
**dadurch gekennzeichnet, dass** zwischen dem Fahrgestell (102) und der Achsbaugruppe (10), insbesondere dem Anlenkkörper (20a, 20b), wenigstens eine längenveränderliche Hebeleinrichtung, vorzugsweise nach Art eines Kniehebels, derart angeordnet ist, dass beim Bewegen der Anlenkkörper (20a, 20b) in Querrichtung (yₐ, y_{b}) die Länge der Hebeleinrichtung in Querrichtung (yₐ, y_{b}) gesehen veränderbar ist.

17. Landwirtschaftliche Verteilmaschine (100) nach Anspruch 16,
**dadurch gekennzeichnet, dass** die Hebeleinrichtung wenigstens einen mit dem Fahrgestell (102) verbundenen ersten Stützhebel und wenigstens einen mit der Achsbaugruppe (10), insbesondere dem Anlenkkörper (20a, 20b), verbundenen zweiten Stützhebel umfasst, wobei die Stützhebel drehbar und/oder klappbar miteinander verbunden sind.
